# EUROPÄISCHE PATENTSCHRIFT

(11) **EP 0 666 792 B1**
(45) Veröffentlichungstag und Bekanntmachung des Hinweises auf die Patenterteilung: **09.04.1997**
(21) Anmeldenummer: 93924083.4
(22) Anmeldetag: 29.10.1993
(51) Int. Cl.: B29C 45/77, B29C 45/57, G05D 7/06

(54) **DRUCKSTEUER- UND/ODER REGELVORRICHTUNG FÜR EIN FLUIDISCHES MEDIUM,INSBESONDERE LUFT ODER GAS**
PRESSURE CONTROLLING AND/OR REGULATING DEVICE FOR A FLUID MEDIUM, IN PARTICULAR AIR OR GAS
DISPOSITIF DE COMMANDE ET/OU DE REGULATION DE LA PRESSION POUR UN MILIEU FLUIDE, NOTAMMENT DE L'AIR OU DU GAZ

(30) Priorität: 29.10.1992 DE 4236460
(43) Veröffentlichungstag der Anmeldung: 16.08.1995
(73) Patentinhaber: Battenfeld GmbH, D-58540 Meinerzhagen (DE)
(72) Erfinder: ECKARDT, Helmut,Dipl.-Ing., D-58540 Meinerzhagen (DE); HOLZSCHUH, Johann, D-58540 Meinerzhagen (DE); EHRITT, Jürgen,Dipl.-Ing., D-57281 Hilchenbach (DE); RENGER, Michael,Dipl.-Ing., D-58540 Meinerzhagen (DE); SCHWESINGER, Rolf, D-58540 Meinerzhagen (DE)
(74) Vertreter: Müller, Gerd, Dipl.-Ing.
(86) Internationale Anmeldenummer: EP9303021
(87) Internationale Veröffentlichungsnummer: WO9409962

(56) Entgegenhaltungen:
- EP-A- 0 033 144
- EP-A- 0 310 914
- WO-A-91/14559
- FR-A- 2 455 767
- US-A- 4 030 523
- PATENT ABSTRACTS OF JAPAN vol. 017, no. 268 (M-1416)25. Mai 1993 & JP,A,05 004 253 (ASAHI) 14. Januar 1993

## Beschreibung

Die Erfindung betrifft eine Drucksteuer- und/oder -regelvorrichtung für ein einem Spritzgießwerkzeug außer der Kunststoffschmelze zuzuführendes fluidisches Medium,
- die zwischen einem Druckerzeuger und einem dem Spritzgießwerkzeug zugeordneten Einspritzsystem vorgesehen ist, bestehend aus,
- einer vom Druckerzeuger zum Einspritzsystem führenden Hauptleitung,
- wobei die Hauptleitung abschnittweise aus mindestens zwei parallelen Strömungswegen besteht,
- wobei jeder Strömungsweg mit je einem wahlweise auf Durchlaß oder Sperrung arbeitenden Medienzustrom-Steuerventil ausgestattet ist,
- und wobei hinter der Vereinigung der beiden Strömungswege von der Hauptleitung eine erste und eine zweite Zweigleitung abgehen,
- wobei die zweite Zweigleitung über ein Medienabstrom-Steuerventil entweder auf Durchlaß oder auf Sperrung schaltbar ist und dabei einen Medienabstrom aus dem Spritzgießwerkzeug bildet.

Eine Drucksteuer- und/oder -regelvorrichtung dieser Art ist durch DE 37 34 164 A1 bzw. EP-03 10 914 A2 bereits bekannt und hat sich auch im praktischen Einsatz grundsätzlich bewährt. Unzulänglichkeiten sind jedoch insofern noch aufgetreten, als einerseits nicht immer eine exakte und präzise reproduzierbare Regelung des Druckes erreicht wird und andererseits die Regelung nicht gleichermaßen sicher sowohl für kleine als auch für große Medienvolumina pro Zeiteinheit funktioniert.

Bei einer anderen, durch die WO 91/14 559 A1 bekanntgewordenen Drucksteuer- und/oder -regelvorrichtung ist es zwar möglich, eine exakte und präzise reproduzierbare Regelung des Druckes zu erreichen, nachteilig dabei ist jedoch der relativ hohe technische Aufwand für die Erstellung dieser Steuer- und /oder -regelvorrichtung. Hinzu kommt noch, daß bei der bekannten Vorrichtung das gesamte Druckkontrollsystem nur in alleiniger Abhängigkeit von der vorhandenen Steuervorrichtung (Kontrolltafel) betrieben werden kann, so daß die Regelung nicht gleichermaßen sicher sowohl für kleine als auch für große Medienvolumina pro Zeiteinheit arbeiten kann.

Bei der vorliegenden Erfindung geht es deshalb darum, die einwandfreie Arbeitsweise der Drucksteuer- und/oder -regelvorrichtung unabhängig davon sicherzustellen, ob nun ein kleiner oder ein großer Durchsatz an Medienvolumina pro Zeiteinheit notwendig ist. Auch soll eine einfachere Abspeicherung der die Fernsteuerung beeinflussenden Daten zusammen mit den übrigen Verarbeitungs-Parametern auf elektrischen oder magnetischen Datenträgern ermöglicht werden.

Diese Aufgabe wird nach der Erfindung dadurch gelöst,
- daß die erste Zweigleitung zu einer Seite eines Drucksensors führt,
- dessen andere Aufnehmerseite für den Mediendruck im Spritzgießwerkzeug empfindlich ist,
- daß das Medienabstrom-Steuerventil in der zweiten Zweigleitung vom Drucksensor beeinflußt ist,
- daß die Medienzustrom-Steuerventile in den parallelen Strömungswegen der Hauptleitung voneinander verschiedene Durchlaßquerschnitte haben,
- und daß diese Medienzustrom-Steuerventile in Abhängigkeit von der jeweils am Drucksensor anstehenden Differenz einerseits zwischen dem in der ersten Zweigleitung herrschenden Druck und andererseits dem in der Kavität bzw. Formnest des Spritzgießwerkzeuges herrschenden Druck durch die Endstufen eines Regelkreises stufenweise einzeln und/oder gemeinsam auf Durchlaß oder Sperrung ansteuerbar sind.

Die Besonderheit des erfindungsgemäßen Lösungsvorschlages liegt nicht nur darin, daß der im Formnest des Spritzgießwerkzeuges anstehende Druck unmittelbar den Schaltzustand des Medienabstrom-Steuerventils beeinflussen kann, sondern daß es darüber hinaus möglich ist, mit dem Einsatz von nur zwei Medienzustrom-Steuerventilen pro Zeiteinheit drei verschiedene Volumenströme des fluidischen Mediums durch die Hauptleitung durchsetzen zu lassen.

Vorteilhaft bei der erfindungsgemäßen Drucksteuer- und/oder - regelvorrichtung ist, daß sowohl für die Medienzustrom-Steuerventile als auch für das Medienabstrom-Steuerventil nicht nur sogenannte Sitzventile, sondern auch andere fernsteuerbare Ventile, bspw. Proportional-Ventile, eingesetzt werden können, sofern sie die Voraussetzung für eine Regelung der einem Spritzgießwerkzeug zuzuführenden Medien-Volumina bieten.

Bewährt hat es sich, wenn nach der Erfindung die Durchlaßquerschnitte der in der Hauptleitung befindlichen beiden Medienzustrom-Steuerventile ein Verhältnis 1,0:0,8 haben und der Durchlaßquerschnitt des Medienabstrom-Steuerventils in der zweiten Zweigleitung dem Durchlaßquerschnitt des kleinsten Medienzustrom-Steuerventils in der Hauptleitung entspricht.

Die Erfindung sieht auch vor, daß die Medienzustrom-Steuerventile in der Hauptleitung und das Medienabstrom-Steuerventil in der zweiten Zweigleitung über einen PID-Regler und eine Logik-Schaltung ansteuerbar sind, daß der PID-Regler mit einem ständig vom Drucksensor beaufschlagten Druckistwert-Eingang und einem über einen Rampen-Einsteller beeinflußbaren Drucksollwert-Eingang in Verbindung steht, und daß dabei über den Rampen-Einsteller ein durch den Drucksensor im Spritzgießwerkzeug abtastbares - aufsteigendes und/oder abfallendes - Druckprofil vorgebbar ist.

Die Schaltung der verschiedenen Steuerventile auf Durchlaß oder Sperrung erfolgt in Abhängigkeit vom Druckgradienten. Spricht also der Drucksensor bspw. auf einen plötzlichen Druckeinbruch bei der Einspritzung des fluidischen Medium (Luft oder Gas) in die Kavität des Spritzgießwerkzeuges an, dann wird entweder vom kleineren auf das größere Medienzustrom-Steuerventil umgeschaltet oder aber zusätzlich zu dem bereits wirksamen Medienzustrom-Steuerventil wird das bisher noch nicht im Betrieb befindliche Medienzustrom-Steuerventil zugeschaltet, um diesen Druckeinbruch schnellstmöglich zu eliminieren.

Nach der Erfindung ist auch vorgesehen, daß ein Eingang des PID-Reglers unmittelbar vom Ausgang eines Druckistwert-Differenzverstärker beaufschlagt wird, während dessen zweiter Eingang über den Ausgang des Rampen-Einstellers von einem Drucksollwert-Differenzverstärker und einem Druckprofil-Differenzverstärker beaufschlagt ist. Darüberhinaus sind der Ausgang des Druckistwert-Differenzverstärkers und der Ausgang des Rampen-Einstellers auch je auf einen Eingang eines Komparators geschaltet, dessen Ausgang mit einem Eingang der Logik-Schaltung verbunden ist.

Die Logik-Schaltung weist mindestens vier Eingänge auf, wobei je einer vom PID-Regler, von einem Taktgeber bzw. Oszillator, von einem Blenden-Signalgeber und vom Komparator beaufschlagt ist, während die Logik-Schaltung mit drei Ausgängen versehen ist, von denen je einer auf jedes der beiden Medienzustrom-Steuerventile und auf das Medienabstrom-Steuerventil geschaltet werden kann.

Von zwei weiteren Eingängen der Logik-Schaltung ist erfindungsgemäß der eine bei Aktivierung des Medienabstrom-Steuerventils und der andere bei Einschaltung der Drucksteuer- und/oder -regelvorrichtung aktivierbar.

Ein besonderer Vorteil der erfindungsgemäßen Drucksteuer- und/oder -regelvorrichtung kann darin gesehen werden, daß sämtliche Bau- und Funktionselemente in einem Gehäuse zu einem Baustein bzw. einem Modul zusammengefaßt sind, welcher für die elektrisch beeinflußbaren Komponenten mit Kontaktsteckvorrichtungen und für die fluidisch beeinflußbaren Komponenten mit ein- und ausgangsseitigen Kupplungssteckvorrichtungen ausgestattet ist.

Abgesehen davon, daß auf diese Art und Weise jeder Baustein bzw. jedes Modul in einem Störungsfall mit wenigen einfachen Handgriffen austauschbar ist, können auch gleichartige Bausteine bzw. Module unterschiedlicher Leistungsfähigkeit verfügbar gehalten werden, um eine problemlose Anpassung der Drucksteuer- und/oder -regelvorrichtung an die unterschiedlichsten Bedürfnisse zu ermöglichen. Schließlich ist aber auch die Möglichkeit gegeben, eine variable Anzahl von Bausteinen bzw. Modulen gemeinsam bzw. nebeneinander an ein und derselben Spritzgießmaschine bzw. ein und demselben Spritzgießwerkzeug in Benutzung zu nehmen.

Dabei ist es nicht nur möglich, mehrere solcher Bausteine bzw. Module an verschiedenen Stellen ein und derselben Kavität eines Spritzgießwerkzeuges wirksam zu machen. Vielmehr kann auch einem Spritzgießwerkzeug mit einer größeren Anzahl von Kavitäten eine entsprechende Anzahl solcher Bausteine bzw. Module zugeordnet werden. Durch die selektive Steuer- und Regelungsmöglichkeit jedes einzelnen Bausteins bzw. Moduls ist es in jedem Falle möglich, eine präzise Einspritzung des fluidischen Mediums in die zugehörige Kavität des Spritzgießwerkzeuges zum gewünschten Zeitpunkt, an einer geeigneten Stelle und mit dem gewünschten Druckprofil vorzunehmen. Dabei ist es wichtig, daß sich mit jedem Baustein bzw. Modul sowohl ansteigende als auch abfallende Druckprofile dauerhaft exakt reproduzieren lassen. Selbstverständlich können die Druckprofile aber durchaus auch konstant sein.

Allgemein ist es üblich, daß das in die Kavitäten der Spritzgießwerkzeuge einzuspeisende fluidische Medium von einem Druckerzeuger bzw. Druckspeicher aus über die Drucksteuer- und/oder -regelvorrichtung zu führen und es anschließend unter Entspannung aus der Kavität zum Zwecke der Rückgewinnung in einen Ausgleichsbehälter zu leiten, von wo aus es dann wieder für den Druckerzeuger verfügbar ist. Diese Arbeitsweise mit sogenannter Medienrückgewinnung ist dann üblich, wenn es sich bei dem Medium um Luft, insbesondere aber um Stickstoff handelt, die bzw. der sich - nach der Ausfilterung darin enthaltender Kunststoffrückstände - zur Wiederverwendung eignet.

Nach der vorliegenden Erfindung wird jedoch auch vorgeschlagen, daß der Druckerzeuger aus einer Stickstoffgewinnungsanlage besteht. Eine solche Stickstoffgewinnungsanlage ist in der Lage, aus normaler Luft bzw. normaler Preßluft, insbesondere aber hochverdichteter Preßluft Stickstoff herauszufiltern und diesen dann über die erfindungsgemäße Drucksteuer- und/oder -regelvorrichtung den Spritzgießwerkzeugen zuzuführen. Abgesehen davon, daß mit Hilfe einer solchen Stickstoffgewinnungsanlage der benötigte Stickstoff auf Dauer kostengünstig verfügbar gemacht werden kann, ergibt sich gegenüber der üblicherweise zur Kosteneinsparung angewendeten Gasrückgewinnung insofern ein vermindertes Betriebsrisiko, als keine Verunreinigung des Stickstoffs eintreten kann, wie dies bei zurückgewonnenem Stickstoff, bspw. durch Restmonomere und Additive durchaus möglich ist.

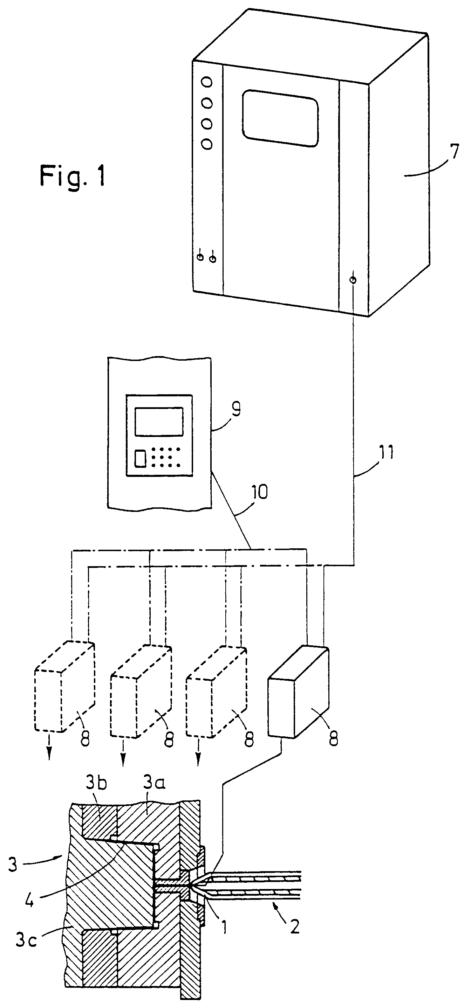

Ausführungsbeispiele der Erfindung werden nachfolgend anhand der Zeichnung erläutert. Es zeigen die
- Figuren 1 bis 3: jeweils in schematisch vereinfachter Darstellung verschiedene Systeme zur Erzeugung von in ihrem Inneren mit gezielten Hohlräumen versehenen Spritzgieß-Formteilen, die außer einer Druckerzeugungseinheit und einer Medien-Einspritzeinheit noch eine stationäre Drucksteuer- und/oder -regelvorrichtung umfassen, die

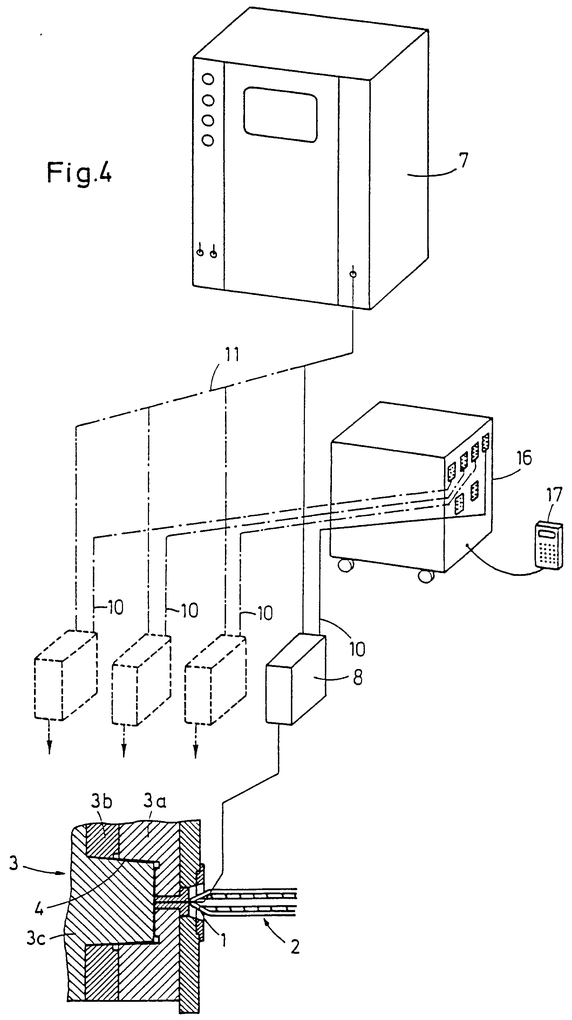

- Figuren 4 bis 6: wiederum in schematisch vereinfachter Darstellung jeweils ein System zur Erzeugung von in ihrem Inneren mit gezielten Hohlräumen versehenen Spritzgieß-Formteilen, die zwischen einer Druckerzeugungseinheit und einer Medien-Einspritzeinheit mit einer mobilen Drucksteuer-und/oder - regelvorrichtung ausgestattet sind,

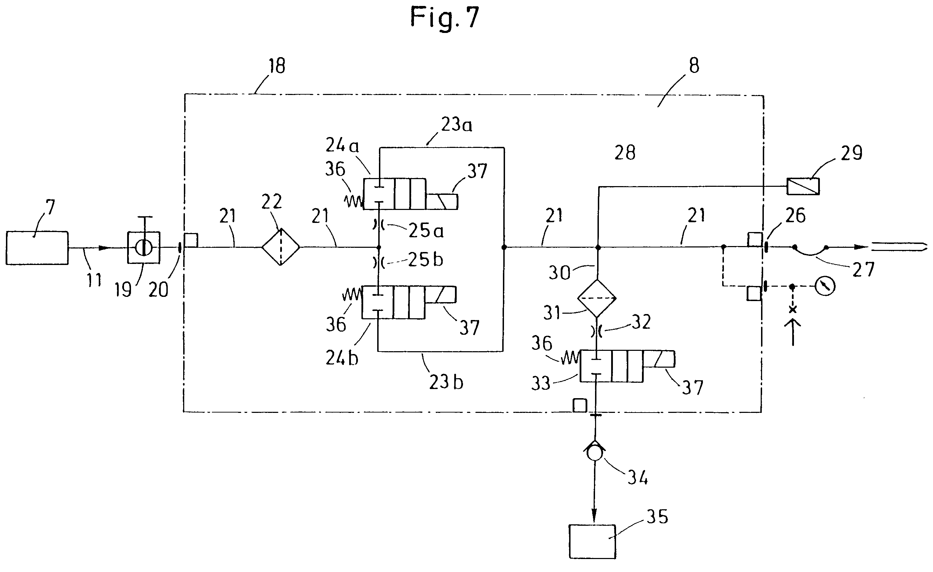

- Figur 7: in Übersichtsdarstellung den erfindungsgemäßen Aufbau einer innerhalb der Systeme nach den Figuren 1 bis 6 benutzbaren Drucksteuer- und/oder -regelvorrichtung, die innerhalb der stationären oder mobilen Steuereinheit in Ein- und/oder Mehrfachanordnung benutzt werden kann und

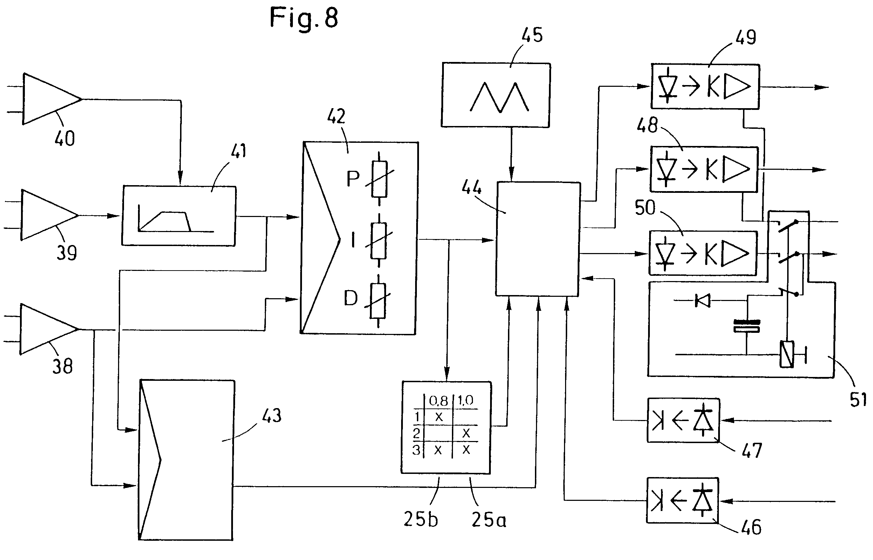

- Figur 8: ein Blockschaltbild einer in Figur 7 dargestellten Drucksteuer- und/oder -regelvorrichtung.

In jeder der Figuren 1 bis 6 der Zeichnung ist von einer vollständigen Spritzgießmaschine der Einfachheit halber lediglich ein mit der Maschinendüse 1 ausgestatteter Teilabschnitt des Spritzaggregates 2 gezeigt, wobei die Maschinendüse 1 an die Angußöffnung eines Spritzgießwerkzeuges 3 zur Anlage gebracht ist. Von den Werkzeugteilen 3a, 3b, 3c des Spritzgießwerkzeuges 3 wird dabei die Kavität bzw. das Formnest 4 eingeschlossen, innerhalb der bzw. dem durch dosiertes Einbringen von Kunststoffschmelze das jeweilige Formteil gebildet werden kann.

Damit innerhalb des jeweils gefertigten Formteils gezielt Hohlräume ausgebildet werden können, ist es notwendig, in die Kavität bzw. das Formnest 4 des Spritzgießwerkzeuges 3 außer der Kunststoffschmelze auch noch ein fluidisches Medium, wie Luft oder Gas, insbesondere Stickstoff, einzuspeisen. Zu diesem Zweck besteht die Notwendigkeit, dem Spritzgießwerkzeug 3 noch ein besonderes Einspritzsystem zuzuordnen, wobei je ein solches Einspritzsystem in jeder der Figuren 1 bis 6 der Zeichnung wiedergegeben ist.

Die in den Figuren 1 und 4 dargestellten Einspritzsysteme sind so aufgebaut, daß das dem Spritzgießwerkzeug 3 außer der Kunststoffschmelze zuzuführende, fluidische Medium, z. B. Stickstoff, unmittelbar durch die Maschinendüse 1 des Spritzgießaggregates 2 in die Kavität bzw. das Formnest 4 eingespeist werden kann.

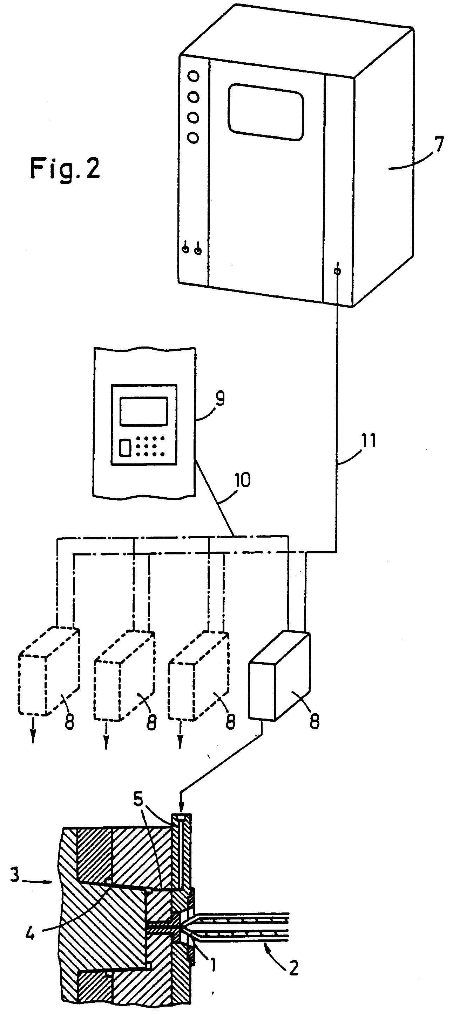

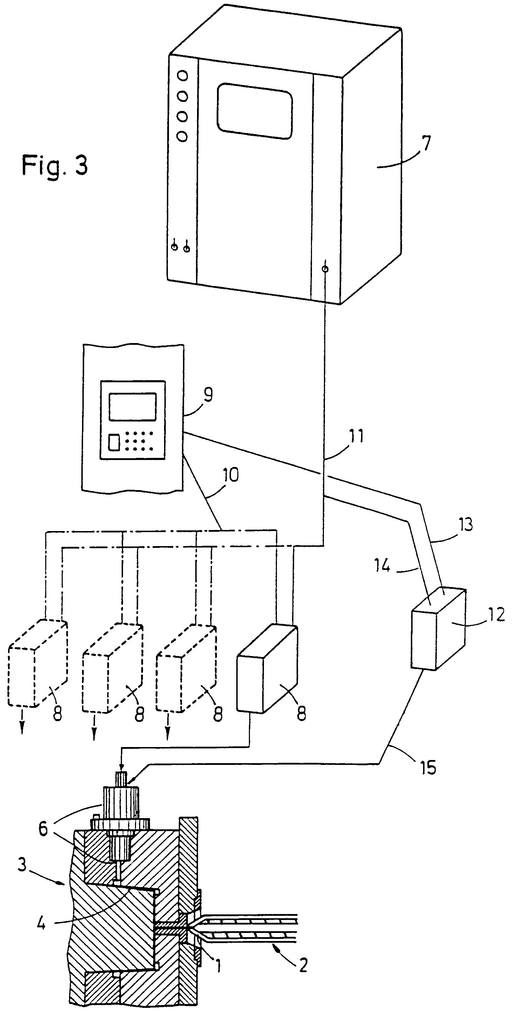

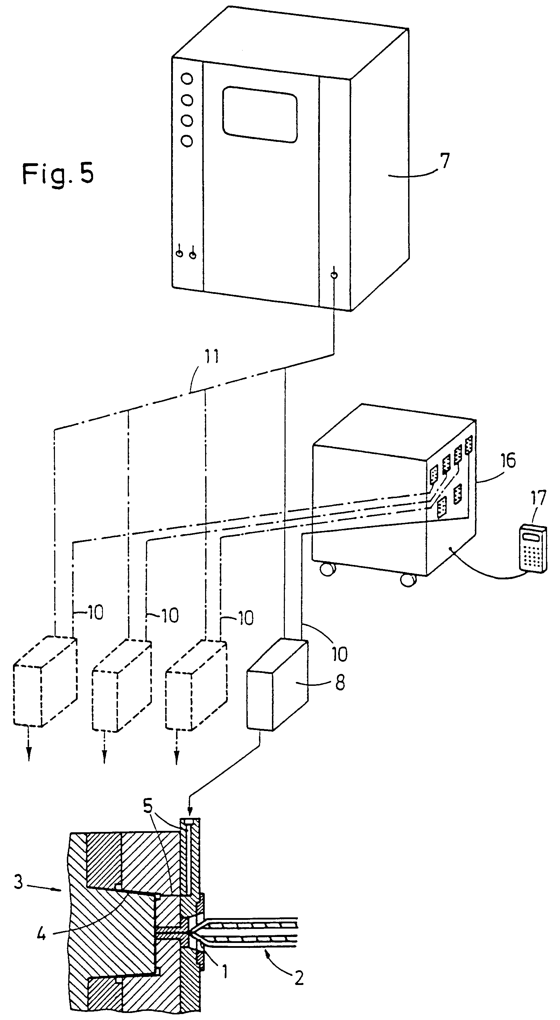

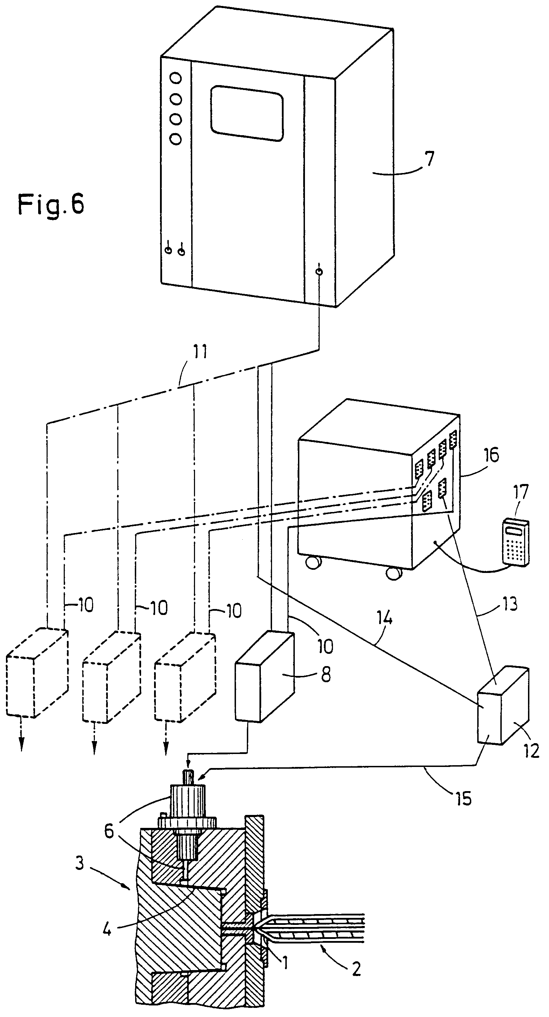

Bei den Einspritzsystemen nach den Figuren 2 und 5 der Zeichnung findet hingegen die Einspeisung des fluidischen Medium, bspw. des Stickstoffs, in die Kavität bzw. das Formnest 4 des Spritzgießwerkzeuges 3 mit Hilfe von stationären Hohlnadel-Einspritzbausteinen 5, während in den Figuren 3 und 6 zum gleichen Zweck die Benutzung von verfahrbaren Hohlnadel-Einspritzbausteinen 6 zu entnehmen ist. Selbstverständlich besteht aber auch die Möglichkeit, zur Einspeisung des zusätzlichen fluidischen Mediums (Stickstoff) in die Kavität bzw. das Formnest des Spritzgießwerkzeuges 3, insbesondere wenn es um die Herstellung relativ komplizierter Formteile geht, alle drei Einspeisungsmöglichkeiten für dieses Medium gleichzeitig in Benutzung zu nehmen.

Jedes in den Figuren 1 bis 6 der Zeichnung dargestellte Einspritzsystem für das zusätzliche fluidische Medium (Stickstoff) umfaßt eine Druckerzeuger-Einheit 7, die üblicherweise einen Kompressor mit nachgeschaltetem Druckspeicher oder zumindest eine Gas-Druckflasche aufweist. Stattdessen kann jedoch auch eine Stickstoffgewinnungsanlage eingesetzt werden, welche es ermöglicht, den Stickstoff aus hochverdichteter Druckluft herauszufiltern. Hier ist also gewissermaßen ein N₂-Generator der Druckerzeuger-Einheit 7 vorgeschaltet.

Während eine herkömmliche Druckerzeuger-Einheit 7 für Stickstoff und gegebenenfalls auch für Luft aus Ersparnisgründen mit Medienrückgewinnung betrieben wird, kann eine Druckerzeuger-Einheit 7 mit vorgeschaltetem N₂-Generator ohne eine solche Medienrückgewinnung arbeiten, weil der Stickstoff auf Dauer kostengünstig verfügbar ist. Die Nachteile, welche sich für eine Medienrückgewinnung aus der Verunreinigung durch Rückstände von Kunststoffmaterial und Additiven ergeben können, sind hier ausgeschaltet.

Jedes der in den Figuren 1 bis 6 der Zeichnung dargestellten Einspritzsysteme zum Einspeisen fluidischen Mediums (Stickstoff) in Spritzgießwerkzeugen 3 enthält als wesentlichen Bestandteil noch eine Drucksteuer- und/oder -regelvorrichtung 8, die in einem Baustein oder Modul zusammengefaßt ist und in mindestens einer Einheit zwischen das Spritzgießwerkzeug 3 und die Druckerzeuger-Einheit 7 eingeschaltet wird. Dabei ist in jedem Einspritzsystem mindestens eine solche Drucksteuer- und/oder -regelvorrichtung 8 vorzusehen. Es können jedoch auch mehrere solcher Drucksteuer- und/oder --regelvorrichtungen gleichzeitig vorgesehen und unabhängig voneinander betrieben werden, wie das in den Figuren 1 bis 6 die (drei) jeweils strichpunktiert angedeuteten weiteren Einheiten erkennbar machen.

Bei den Einspritzsystemen nach den Figuren 1 bis 3 ist die elektrische Steuerung 9 für die Drucksteuer- und/oder -regelvorrichtung 8 bzw. sind die Drucksteuer- und/oder -regelvorrichtungen 8 stationär vorgesehen, bspw. an die Spritzgießmaschine angebaut, so daß diese unmittelbar von aus über Leitungsverbindungen 10 beeinflußbar sind, während sie andererseits über Rohre, Schläuche und Verschraubungen 11 eine Verbindung zur Druckerzeuger-Einheit 7 haben. Beim Einspritzsystem nach Figur 3 ist noch eine sogenannte Druckbewegungsvorrichtung 12 vorhanden, die eine Leitungsverbindung 13 zur elektrischen Steuerung 9 der Spritzgießmaschine hat und auch über Rohre, Schläuche und Verschraubungen 14 mit der Druckerzeuger-Einheit 7 in Verbindung steht. Von dieser Druckbewegungsvorrichtung 12 wird über Rohre, Schläuche und Verschraubungen oder dergleichen die Verfahrbewegung für den Hohlnadel-Einspritzbaustein 6 hervorgebracht, und zwar unter der Einwirkung des gleichen fluidischen Mediums (Stickstoff), welches auch in die Kavität bzw. in das Formnest 4 des Spritzgießwerkzeuges 3 eingespeist werden muß. Eine Leckage des den Hohlnadel-Einspritzbaustein 6 verschiebenden Mediums kann also das in die Kavität bzw. das Formnest 4 einzuspeisende Medium nicht verunreinigen.

Bei den Einspritzsystemen nach den Figuren 4 bis 6 sind nicht nur die Drucksteuer- und/oder -regelvorrichtungen 8 als mobile Einheiten vorgesehen, sondern sie stehen auch elektrisch über Leitungsverbindungen 10 mit einem ebenfalls mobilen Steuerschrank 16 in Verbindung. Andererseits sind sie aber über Rohre, Schläuche und Verschraubungen 11 auch an die Druckerzeuger-Einheit 7 angeschlossen. Mit dem mobilen Steuerschrank 16 läßt sich ein Handprogrammiergerät 17 in Verbindung bringen. Der Steuerschrank 16 ist über eine Schnittstelle mit der Maschinensteuerung verbunden.

Im Falle des Einspritzsystems nach Figur 6 ist ebenfalls eine Druckbewegungsvorrichtung 12 vorhandene, welche über Rohre, Schläuche und Verschraubungen 15 den verfahrbaren Hohlnadel-Einspritzbaustein 6 beeinflussen kann, und zwar in Abhängigkeit von einer Leitungsverbindung 13 zum mobilen Steuerschrank 16 und von einer durch Rohre, Schläuche und Verschraubungen 14 zur Druckerzeuger-Einheit 7 hergestellten Verbindung.

In Figur 7 der Zeichnung wird gezeigt, welchen Aufbau eine Drucksteuer- und/oder -regelvorrichtung 8 im einzelnen aufweist. Dabei ist angedeutet, daß die Drucksteuer- und/oder - regelvorrichtung 8 insgesamt in einem Gehäuse 18 untergebracht und auf diese Art und Weise zu einem Baustein bzw. einem Modul zusammengefaßt ist, der sich manuell nur durch einen Absperrhahn 19 von außerhalb des Gehäuses 18 beeinflussen läßt.

Der Absperrhahn 19 steht über einer Verschraubung 20 oder einer ähnlichen Rohrkupplung mit einer Hauptleitung 21 in Verbindung, in der ein Filter 22 angeordnet ist. Hinter dem Filter 22 besteht diese Hauptleitung 21 abschnittweise aus mindestens zwei parallelen Strömungswegen 23a und 23b, wobei im Strömungsweg 23a ein als 2-Wege-Ventil ausgelegtes Medienzustrom-Steuerventil 24a und im Strömungsweg 23b ein ebenfalls als 2-Wege-Ventil ausgelegtes Medienzustrom-Steuerventil 24b angeordnet ist. Jedes dieser Medienzustrom-Steuerventile 24a, 24b kann als ein Sitzventil ausgeführt oder durch ein anderes fernsteuerbares Ventil, z. B. ein Proportionalventil gebildet werden, das wahlweise auf Durchlaß oder Sperrung ansteuerbar ist. Jedem Medienzustrom-Steuerventil 24a, 24b ist dabei ein besonderes Drosselventil 25a bzw. 25b, bspw. zustromseitig, zugeordnet. Für die beiden Drosselventile 25a und 25b sind dabei bspw. Querschnittsverhältnisse von 1,0:0,8 gewählt. Hinter den beiden Medienzustrom-Steuerventilen 24a und 24b werden die beiden Strömungswege 23a und 23b wieder zu einem Hauptleitungsstrang 21 miteinander vereinigt, der an seinem anderen Ende in einer Verschraubung oder einer ähnlichen Verbindungskupplung 26 endet. Über diese Verschraubung 26 oder ähnliche Kupplung läßt sich die Hauptleitung 21 bspw. unter Zwischenschaltung einer biegsamen Leitung 27 an das Spritzgießwerkzeug 3 anschließen, und zwar bedarfsweise entweder über die Maschinendüse 1 des Spritzaggregates 2 oder aber über einen Hohlnadel-Einspritzbaustein 5 bzw. 6.

Hinter der Vereinigung der beiden Strömungswege 23a und 23b geht von der Hauptleitung 21 eine erste Zweigleitung 28 ab, über welche die eine Seite eines Drucksensors 29 beaufschlagbar ist, dessen andere Seite für den Druck innerhalb der Kavität bzw. des Formnestes 4 im Spritzgießwerkzeug 3 empfindlich ist. Eine zweite Zweigleitung 30 ist über einen Filter 31, ein Drosselventil 32, ein als 2-Wege-Ventil ausgelegtes Medienabstrom-Steuerventil 33 und ein Rückschlagventil 34 zu einem Ausgleichsbehälter 35 geführt, der wiederum eine (nicht gezeigte) Verbindung zur Druckerzeuger-Einheit 7 haben kann. Das Drosselventil 32 hat die gleiche Auslegung wie das Drosselventil 25b, während das Medienabstrom-Steuerventil 33 baulich und funktionell mit den Medienzustrom-Steuerventilen 24a und 24b übereinstimmt.

Erwähnt sei hier noch, daß sämtliche Medienzustrom-Steuerventile 24a, 24b und das Medienabstrom-Steuerventil 33 beim gezeigten Ausführungsbeispiel als Sitzventile ausgeführt sind, die durch Federkraft 36 in ihrer den Durchfluß sperrenden Stellung gehalten werden. Durch fremdgesteuerten Kraftantrieb, bspw. einen Elektromagneten 37, lassen sich diese Sitzventile jedoch auf Durchlaß umstellen. Beeinflußt werden dabei die Fremdsteuerungen, bspw. Elektromagnete 37, von dem Drucksensor 29, und zwar in Abhängigkeit von der Druckdifferenz, die zwischen dem einerseits in der Zweigleitung 28 anstehenden Druck und andererseits dem in der Kavität bzw. dem Formnest 4 des Spritzgießwerkzeuges 3 anstehenden Druck bestimmt wird.

Die Wirkungsweise einer Drucksteuer- und/oder -regelvorrichtung 8, wie sie in Figur 7 der Zeichnung dargestellt ist, ergibt sich aus der nachfolgenden Funktionsbeschreibung des Blockschaltbildes der Figur 8.

Nach Figur 8 hat die Drucksteuer- und/oder -regelvorrichtung drei Differenzverstärkereingänge 38, 39 und 40, nämlich den Druckistwert-Eingang 38, Drucksollwert-Eingang 39 und einen Rampensollwert-Eingang 40. Der Drucksollwert-Eingang 39 und der Rampensollwert-Eingang 40 arbeiten mit den Eingangsseiten eines Rampen-Einstellers 41 zusammen, dessen Ausgang ebenso zur Eingangsseite eines PID-Reglers 42 geführt ist, wie der Ausgang des Druckistwert-Differenzverstärkers 38.

Der Rampen-Einsteller 41 ist so ausgelegt, daß er aus einem sprunghaft ansteigenden Eingangssignal ein langsam ansteigendes Ausgangssignal bildet. Die Anstieg- bzw. Abfallzeit des Ausgangssignales ist dabei über den Rampensollwert-Differenzverstärker 40 einstellbar.

Der Ausgang des Rampen-Einstellers 41 beaufschlagt auch die Eingangsseite eines Komparators 43, die weiterhin vom Ausgang des Druckistwert-Differenzverstärkers 38 beeinflußt wird.

Der Ausgang des PID-Reglers 42 ist einerseits auf einen ersten Eingang einer Logik-Schaltung 44 gelegt und andererseits auf die Blenden der beiden Drosselventile 25a und 25b geschaltet.

Über einen zweiten Eingang wirkt auf die Logik-Schaltung 44 ein Taktgeber bzw. Oszillator 45 ein. Auf einen dritten Eingang der Logik-Schaltung 44 ist der Ausgang des Blendenstellers 25a/25b für die Drosselventile 25a und 25b geschaltet, während ein vierter Eingang derselben vom Ausgang des Komparators 43 beeinflußt ist. Auf einen fünften Eingang der Logik-Schaltung 44 ist ein Schaltgerät 46 gelegt, welches die Einschaltung der Drucksteuer- und/oder -regelvorrichtung 8 signalisiert, während auf einen sechsten Eingang der Logik-Schaltung 44 ein Schaltgerät 47 gelegt ist, welches ein Signal gibt, wenn das 2-Wege-Ventil 33 und damit das Drosselventil 32 auf Durchlaß geschaltet ist.

Die Logik-Schaltung 44 hat drei Ausgänge, von denen der erste auf eine Endstufe 48, der zweite auf eine Endstufe 49 und der dritte auf eine Endstufe 50 des in Figur 8 dargestellten Regelkreises arbeitet. Die Endstufe 48 dieses Regelkreises arbeitet mit dem Medienzustrom-Steuerventil 24a nach Figur 7 zusammen, während die Endstufe 49 dieses Regelkreises das Medienzustrom-Steuerventil 24b nach Figur 7 beeinflußt und die Endstufe 50 auf das Medienabstrom-Steuerventil 33 nach Figur 7 einwirkt.

Der Komparator 43 vergleicht den Drucksollwert mit dem Druckistwert. Solange der Druckistwert kleiner bleibt als der Drucksollwert werden nur die Medienzustrom-Steuerventile 24a und 24b freigegeben. Wenn der Druckistwert den Drucksollwert erreicht, werden sowohl die Medienzustrom-Steuerventile 24a und 24b als auch das Medienabstrom-Steuerventil 33 ausgeschaltet und damit auf Sperrung gebracht.

Der PID-Regler 42 vergleicht den Druckistwert und den Drucksollwert und gibt je nach Regelabweichung von dem durch den Rampen-Einsteller vorgegebenen Wert ein entsprechend großes Stellsignal aus. Aus der Größe dieses Stellsignales wird in der Logik-Schaltung 44 eine Auswahl dafür getroffen, welches der beiden Medienzustrom-Steuerventile 24a und 24b über die Endstufen 48 und 49 auf Durchlaß freizugeben ist.

Liegt nur eine kleine Regelabweichung vor, dann wird lediglich das Medienzustrom-Steuerventil 24b angesteuert, welches mit dem Drosselventil 25b zusammenarbeitet, das den kleinen Durchlaß (0,8 mm) hat. Ergibt sich eine mittlere Regelabweichung, dann wird über die Endstufe 49 nur das Medienzustrom-Steuerventil 24a auf Durchlaß angesteuert, welches mit dem Drosselventil 25a mit dem größeren Durchlaßquerschnitt (1,0) zusammenwirkt. Stellt sich hingegen eine große Regelabweichung ein, dann veranlassen beide Endstufen 48 und 49 das Schalten beider Medienzustrom-Steuerventile 24a und 24b auf Durchlaß, damit die größtmögliche Menge des fluidischen Mediums durchgesetzt werden kann.

In der Logik-Schaltung 44 werden die Signale des Taktgebers bzw. Oszillators 45, des PID-Reglers 42 der Blende 25a/25b sowie auch der Schaltgeräte 46 und 47 miteinander verknüpft und den Endstufen 48, 49 und 50 des Regelkreises zugeführt. Die der Endstufe 50 zugeordnete Funktion 51, welche eine Diode, Kondensatoren und ein Relais umfaßt, ist solcher Art, daß nach Abschalten der Versorgungsspannung für die gesamte Drucksteuer- und/oder -regelvorrichtung 8 in jedem Falle das Medienabstrom-Steuerventil 33 angesteuert wird und damit sichergestellt ist, daß eine Druckentlastung der Kavität bzw. des Formnestes 4 im Spritzgießwerkzeug 3 stattfindet.

Abschließend sei hier noch erwähnt, daß jeder von einem Gehäuse 18 eingeschlossene Baustein bzw. jedes Modul nicht nur die Bau- und Funktionselemente nach Figur 7, sondern auch alle zugehörigen Bau- und Funktionselemente nach Figur 8 der Zeichnung umfaßt und damit jede Drucksteuer- und/oder -regelvorrichtung 8 als autarkes Gerät einsatzfähig ist, welches mit einer oder auch mehreren Einheiten jedem Einspritzsystem zugeordnet werden kann, das mit den dazu passenden Schnittstellen ausgestattet ist.

### Liste der Bezugszeichen

- 1: Maschinendüse
- 2: Spritzaggregat
- 3: Spritzgießwerkzeug
- 3a, 3b, 3c: Werkzeugteile
- 4: Kavität/Formnest
- 5: stationärer Hohlnadel-Einspritzbaustein
- 6: verfahrbarer Hohlnadel-Einspritzbaustein
- 7: Druckerzeuger-/Druckspeicher-Einheit
- 8: Drucksteuer- und/oder -regelvorrichtung
- 9: elektrische Steuerung
- 10: Leitungsverbindung
- 11: Rohr, Schlauch, Verschraubung
- 12: Druckbewegungsvorrichtung
- 13: Leitungsverbindung
- 14: Rohr, Schlauch, Verschraubung
- 15: Rohr, Schlauch, Verschraubung
- 16: mobiler Steuerschrank
- 17: Handprogrammiergerät
- 18: Gehäuse
- 19: Absperrhahn
- 20: Verschraubung
- 21: Hauptleitung
- 22: Filter
- 23a, 23b: parallele Strömungswege
- 24a, 24b: Medienzustrom-Steuerventil
- 25a, 25b: Drosselventile
- 26: Verschraubung
- 27: biegsame Leitung
- 28: erste Zweigleitung
- 29: Drucksensor
- 30: zweite Zweigleitung
- 31: Filter
- 32: Drosselventil
- 33: Medienabstrom-Steuerventil
- 34: Rückschlagventil
- 35: Ausgleichsbehälter
- 36: Federkraft
- 37: Elektromagnet
- 38: Istwert-Differenzverstärker
- 39: Sollwert-Differenzverstärker
- 40: Rampensollwert-Differenzverstärker
- 41: Rampen-Einsteller
- 42: PID-Regler
- 43: Komparator
- 44: Logik-Schaltung
- 45: Taktgeber/Oszillator
- 46: Schaltgerät
- 47: Schaltgerät
- 48: Endstufe zum Medienzustrom-Steuerventil 24a
- 49: Endstufe zum Medienzustrom-Steuerventil 24b
- 50: Endstufe zum Medienabstrom-Steuerventil 33
- 51: Funktion

## Patentansprüche

1. Drucksteuer- und/oder Regelvorrichtung (8) für ein einem Spritzgießwerkzeug (3) außer der Kunststoffschmelze zuzuführendes fluidisches Medium,
- die zwischen einem Druckerzeuger (7) und einem dem Spritzgießwerkzeug (3) zugeordneten Einspritzsystem (5, 6) vorgesehen ist, bestehend aus
- einer vom Druckerzeuger/Druckspeicher (7) zum Einspritzsystem (5, 6) führenden Hauptleitung (21),
- wobei die Hauptleitung (21) abschnittweise mindestens 2 parallele Strömungswege (23a, 23b) aufweist
- und jeder Strömungsweg (23a, 23b) mit je einem wahlweise auf Durchlaß oder Sperrung arbeitenden Medienzustrom-Steuerventil (24a, 24b) ausgestattet ist,
- wobei von der Hauptleitung (21) hinter der Vereinigung der parallelen Strömungswege (23a, 23b) eine erste Zweigleitung (28) und eine zweite Zweigleitung (30) abgehen,
- von denen nur die zweite Zweigleitung (30) über ein Medienabstrom-Steuerventil (33) entweder auf Durchlaß oder auf Sperrung schaltbar ist und dabei einen Medienabstrom aus dem Spritzgießwerkzeug (3) bildet,
**dadurch gekennzeichnet,**
- daß die erste Zweigleitung zu einer Seite eines Drucksensors (29) führt,
- dessen andere Aufnehmerseite für den Mediendruck im Spritzgießwerkzeug (3) empfindlich ist,
- daß vom Drucksensor (29) das Medienabstrom-Steuerventil (33) der zweiten Zweigleitung (30) beeinflußt ist,
- daß die Medienzustrom-Steuerventile (24a, 24b) in den parallelen Strömungswegen (23a, 23b) der Hauptleitung (21) voneinander verschiedene Durchlaßquerschnitte (25a, 25b) haben,
- und daß diese Medienzustrom-Steuerventile (24a, 24b) in Abhängigkeit von der jeweils am Drucksensor (29) anstehenden Differenz zwischen dem einerseits in der ersten Zweigleitung (28) herrschenden Druck und dem andererseits in der Kavität bzw. dem Formnest (4) des Spritzgießwerkzeuges (3) herrschenden Druck durch die Endstufen (48 und/oder 49) eines Regelkreises stufenweise einzeln und/oder gemeinsam auf Durchlaß oder Sperrung ansteuerbar sind.

2. Drucksteuer- und/oder Regelvorrichtung (8) nach Anspruch 1,
**dadurch gekennzeichnet,**
daß sie als eine zwischen dem Druckerzeuger (7) und dem dem Spritzgießwerkzeug (3) zugeordneten Einspritzsystem (5, 6) anzuordnende mobile Einheit vorgesehen ist.

3. Drucksteuer- und/oder -regelvorrichtung nach Anspruch 1 oder 2,
**dadurch gekennzeichnet,**
daß die Durchlaßquerschnitte (25a und 25b) der in der Hauptleitung (21) befindlichen beiden Medienzustrom-Steuerventile (24a und 24b) ein Verhältnis (1,0:0,8) haben und der Durchlaßquerschnitt (32) des Medienabstrom-Steuerventils (33) in der zweiten Zweigleitung (30) dem kleinsten Durchlaßquerschnitt (25b) des Steuerventils (24b) in der Hauptleitung (21) entspricht.

4. Drucksteuer- und/oder -regelvorrichtung nach einem der Ansprüche 1 bis 3,
**dadurch gekennzeichnet,**
daß die Medienzustrom-Steuerventile (24a und 24b) in der Hauptleitung (21) und das Medienabstrom-Steuerventil (33) in der zweiten Zweigleitung (30) über einen PID-Regler (42) und eine Logik-Schaltung (44) ansteuerbar sind (49, 50, 51), und daß der PID-Regler (42) mit einem ständig vom Drucksensor (29) beaufschlagten Druckistwert-Eingang (38) und einem über einen Rampen-Einsteller (41) beeinflußbaren Drucksollwert-Eingang (39) in Verbindung steht, und daß dabei über den Rampen-Einsteller (41) ein durch den Drucksensor (29) im Spritzgießwerkzeug (3) abtastbares - konstantes, aufsteigendes und/oder abfallendes - Druckprofil vorgebbar ist.

5. Drucksteuer- und/oder regelvorrichtung nach Anspruch 4,
**dadurch gekennzeichnet,**
daß ein Eingang des PID-Reglers (42) unmittelbar vom Ausgang eines Druckistwert-Differenzverstärkers (38) beaufschlagt ist, während dessen zweiter Eingang über den Ausgang des Rampen-Einstellers (41) von einem Drucksollwert-Differenzverstärker (39) und einem Druckprofil-Differenzverstärker (40) beaufschlagbar ist.

6. Drucksteuer- und/oder regelvorrichtung Anspruch 5,
**dadurch gekennzeichnet,**
daß der Ausgang des Druckistwert-Differenzverstärkers (38) und der Ausgang des Rampen-Einstellers (41) auch je auf einen Eingang eines Komparators (43) geschaltet sind, dessen Ausgang mit einem Eingang der Logik-Schaltung (44) verbunden ist.

7. Drucksteuer- und/oder -regelvorrichtung nach Anspruch 6,
**dadurch gekennzeichnet,**
daß die Logik-Schaltung (44) mindestens vier Eingänge aufweist, wobei je einer vom PID-Regler (42), von einem Taktgeber bzw. Oszillator (45), von einem Blenden-Signalgeber (25a/25b) und vom Komparator (43) beaufschlagbar ist, und daß die Logik-Schaltung mit drei Ausgängen versehen ist, von denen je einer auf eine Endstufe (48, 49 bzw. 50) für jedes der beiden Medienzustrom-Steuerventile (24a und 24b) und für das Medienabstrom-Steuerventil (33) geschaltet ist.

8. Drucksteuer- und/oder -regelvorrichtung nach Anspruch 7,
**dadurch gekennzeichnet,**
daß von zwei weiteren Eingänge der Logik-Schaltung (44) der eine bei Aktivierung des Medienabstrom-Steuerventils (33) und der andere bei Einschaltung der Drucksteuer- und/oder -regelvorrichtung (8) aktivierbar ist (47 bzw. 46).

9. Drucksteuer- und/oder -regelvorrichtung nach einem der Ansprüche 1 bis 8,
**dadurch gekennzeichnet,**
daß sämtliche Bau- und Funktionselemente in einem Gehäuse (18) zu einem Baustein bzw. einem Modul zusammengefaßt sind, welcher für die elektrisch beeinflußbaren Komponenten mit Kontaktsteckvorrichtungen und für die fluidisch beeinflußbaren Komponenten mit ein- und ausgangsseitigen Kupplungssteckvorrichtungen ausgestattet ist.

10. Drucksteuer- und/oder -regelvorrichtung nach einem der Ansprüche 1 bis 9,
**dadurch gekennzeichnet,**
daß der Druckerzeugereinheit (7) eine Stickstoffgewinnungsanlage vorgeschaltet ist, die Stickstoff aus Luft herausfiltert.

## Claims

1. Pressure controlling and/or regulating device (8) for a fluid medium supplied to an injection moulding tool (3) apart from the synthetic material melt,
- which is provided between a pressure generator (7) and an injection system (5, 6) associated with the injection moulding tool (3), consisting of
- a main duct (21) leading from the pressure generator/pressure store (7) to the injection system (5, 6),
- wherein the main duct (21) in section has at least two parallel flow paths (23a, 23b) and each flow path (23a, 23b) is equipped with a medium inflow control valve (24a, 24b) selectably operating for throughflow or blocking,
- wherein a first branch duct (28) and a second branch duct (30) go off from the main duct (21) behind the combining of the parallel flow paths (23a, 23b),
- of which only the second branch duct (30) is switchable by way of a medium outflow control valve (30) either to throughflow or to blocking and thus forms a medium outflow from the injection moulding tool (3),
characterised thereby
- that the first branch duct leads to one side of a pressure sensor (29),
- the other receiver side of which is sensitive to the medium pressure in the injection moulding tool (3),
- that the medium outflow control valve (33) of the second branch duct (30) is influenced by the pressure sensor (29), that the medium inflow control valves (24a, 24b) in the parallel flow paths (23a, 23b) of the main duct (21) have throughflow cross-sections (23a, 23b) different from one another,
- and that these medium inflow control valves (24a, 24b) are drivable in steps individually and/or in common to throughflow or blocking by the end stages (48 and/or 49) of a regulating circuit in dependence on the difference, which is present each time at the pressure sensor (29), between the pressure prevailing on the one hand in the first branch duct (28) and the pressure prevailing on the other hand in the cavity or the mould nest (4) of the injection moulding tool (3).

2. Pressure controlling and/or regulating device (8) according to claim 1, characterised thereby that it is provided as a mobile unit to be arranged between the pressure generator (7) and the injection moulding tool (3).

3. Pressure controlling and/or regulating device according to claim 1 or 2, characterised thereby that the throughflow cross-sections (25a and 25b) of the two medium inflow control valves (24a and 24b) disposed in the main duct (21) have a ratio (1.0 : 0.8) and the throughflow cross-section (32) of the medium outflow control valve (33) in the second branch duct (30) corresponds to the smallest throughflow cross-section (25b) of the control valve (24b) in the main duct (21).

4. Pressure controlling and/or regulating device according to one of claims 1 to 3, characterised thereby that the medium inflow control valves (24a and 24b) in the main duct (21) and the medium outflow control valve (33) in the second branch duct (30) are drivable by way of a PID regulator (42) and a logic circuit 944) and that the PID regulator (42) stands in connection with an actual pressure value (38) constantly loaded by the pressure sensor (29) and a target pressure value input (39) influenceable by way of a ramp setter (41), and that a constant, increasing and/or decaying pressure profile detectable in the injection moulding tool (3) by the pressure sensor (29) is presettable in that case by way of the ramp setter (41).

5. Pressure controlling and/or regulating device according to claim 4, characterised thereby that an input of the PID regulator (42) is directly loaded by the output of an actual pressure value difference amplifier (38), whilst the second input thereof is loadable by way of the output of the ramp setter (41) by a target pressure value difference amplifier (39) and a pressure profile difference amplifier (40).

6. Pressure controlling and/or regulating device according to claim 5, characterised thereby that the output of the actual pressure value difference amplifier (38) and the output of the ramp setter (41) are also each connected to an input of a comparator (43), the output of which is connected with an input of the logic circuit (44).

7. Pressure controlling and/or regulating device according to claim 6, characterised thereby that the logic circuit (44) has at least four inputs, wherein each is loadable by one of the PID regulator (42), a pulse transmitter or oscillator (45), a screening signal transmitter (25a/25b) and the comparator (43), and that the logic circuit is provided with three outputs, of which each one is connected to an end stage (48, 49 or 50) for each of the two medium inflow control valves (24a and 24b) and for the medium outflow control valve (33).

8. Pressure controlling and/or regulating device according to claim 7, characterised thereby that of two further inputs of the logic circuit (44) the one is activatable (47) on activation of the medium outflow control valve (33) and the other is activatable (46) on switching-on of the pressure control and/or regulating device (8).

9. Pressure controlling and/or regulating device according to one of claims 1 to 8, characterised thereby that the entire constructional and functional elements are combined in a housing (18) into a constructional block or a module, which is equipped with contact plug devices for the electrically influenceable components and with coupling plug devices at the inlet and outlet sides for the components influenceable by fluid.

10. Pressure controlling and/or regulating device according to one of claims 1 to 9, characterised thereby that a nitrogen recovery plant, which filters nitrogen from air, is connected upstream of the pressure generating unit (7).

## Revendications

1. Dispositif de commande et/ou de réglage de pression (8) d'un fluide destiné à être alimenté dans un moule d'injection (3), fluide autre que la matière synthétique fondue,
- dispositif agencé entre un générateur de pression (7) et un moyen d'injection (5,6) associé au moule d'injection (3), constitué par
- une conduite principale (21) menant du générateur de pression/accumulateur de pression (7) au moyen d'injection (5,6),
- ladite conduite principale (21) comportant un tronçon d'au moins deux voies de passage parallèles (23a,23b)
- et chaque voie de passage (23a,23b) étant équipée chaque fois d'une vanne de commande du courant d'alimentation de fluide (24a,24b) qui est soit ouverte, soit fermée,
- une première (28) et une deuxième (30) conduite de dérivation partant de la conduite principale (21), derrière la réunion des voies de passage parallèles (23a,23b),
- uniquement la deuxième conduite de dèrivation (30) étant commandable en état de passage ou obturation par une vanne de commande du courant d'évacuation de fluide (33) et formant ainsi un courant d'évacuation de fluide du moule d'injection (3),
caractérisé en ce que
- la première conduite de dérivation mène à un côté d'un palpeur de pression (29)
- dont l'autre côté palpeur est sensible à la pression de fluide dans le moule d'injection (3),
- le palpeur de pression (29) agit sur la vanne de commande du courant d'évacuation (33) de la deuxième conduite de dérivation (30),
- les vannes de commande du courant d'alimentation de fluide (24a,24b) dans les voies de passage parallèles (23a,23b) de la conduite principale (21) ont des sections de passage différentes (25a,25b), et
- ces vannes de commande du courant d'alimentation de fluide (24a,24b) sont commandables par étapes, individuellement et/ou simultanément, en état de passage ou obturation, en fonction de la différence de pression au palpeur (29) entre, d'une part, la pression régnant dans la première conduite de dérivation (28) et, d'autre part, la pression régnant dans la cavité ou le creux (4) du moule d'injection (3), par les étages de sortie (48 et/ou 49) d'un circuit de régulation.

2. Dispositif de commande et/ou de réglage de pression (8) selon la revendication 1
caractérisé en ce qu'il consiste en une unité mobile destinée à être agencée entre le générateur de pression (7) et le moyen d'injection (5,6) associé au moule d'injection (3).

3. Dispositif de commande et/ou de réglage de pression selon la revendication 1 ou 2
caractérisé en ce que les sections de passage (25a et 25b) des deux vannes de commande du courant d'admission de fluide (24a et 24b) se trouvent dans le rapport (1,0:0,8) et la section de passage (32) de la vanne de commande de fluide d'évacuation (33) dans la deuxième conduite de dérivation (30) correspond à la plus petite section de passage (25b) de la vanne de commande (24b) dans la conduite principale (21).

4. Dispositif de commande et/ou de réglage de pression selon l'une des revendications 1 à 3
caractérisé en ce que les vannes de commande du courant de fluide d'alimentation (24a et 24b) dans la conduite principale (21), et la vanne de commande du courant de fluide d'évacuation (33) dans la deuxième conduite de dérivation (30) sont commandables (49,50,51) par un régulateur P.I.D. (42) et un circuit logique (44), et en ce que le régulateur P.I.D. (42) est en relation avec une entrée de pression effective (38) continuellement alimentée par le palpeur de pression (29) et avec une entrée de pression de consigne (39) qui est, elle, réglable par un régulateur linéaire (41), et en ce qu'une courbe de pression constante, montante et/ou descendante, palpable par le palpeur de pression (29) agencé dans le moule d'injection (3), est ainsi prédéterminable par l'intermédiaire du régulateur linéaire (41).

5. Dispositif de commande et/ou de réglage de pression selon la revendication 4
caractérisé en ce qu'une entrée du régulateur P.I.D. (42) est alimentée directement par la sortie d'un amplificateur différentiel de la valeur de pression efficace (38), tandis-que la deuxième entrée dudit régulateur P.I.D. est alimentée par l'intermédiaire de la sortie du régulateur linéaire (41), par un amplificateur différentiel de la valeur de pression de consigne (39) et un amplificateur différentiel de la courbe de pression (40).

6. Dispositif de commande et/ou de réglage de pression selon la revendication 5
caractérisé en ce que la sortie de l'amplificateur différentiel de la valeur de pression efficace (38) et la sortie du régulateur linéaire (41) sont chacune raccordées à une entrée d'un comparateur (43) dont la sortie est reliée à une entrée du circuit logique (44).

7. Dispositif de commande et/ou de réglage de pression selon la revendication 6
caractérisé en ce que le circuit logique (44) comporte au moins quatre entrées alimentées chacune par le régulateur P.D.I. (42), un générateur d'impulsions ou oscillateur (45), un générateur de signal d'étrangleur (25a/25b) et un comparateur (43), et en ce que le circuit logique est muni de trois sorties qui sont chacune branchées sur un étage final (48,49 ou 50) pour chacune des deux vannes de commande du courant de fluide d'alimentation (24a et 24b) et pour la vanne de commande du fluide d'évacuation (33).

8. Dispositif de commande et/ou de réglage de pression selon la revendication 7
caractérisé en ce que, parmi deux entrées supplémentaires ducircuit logique (44), l'une est activée lors de l'actionnement de la vanne de commande du courant de fluide d'évacuation (33) et l'autre est activable (47 ou 46) lors de l'enclenchement du dispositif de commande et/ou de réglage de pression (8).

9. Dispositif de commande et/ou de réglage de pression selon l'une des revendications 1 à 8
catactérisé en ce que tous les éléments de construction et éléments fonctionnels sont logés dans un boîtier (18) qui constitue une unité de construction ou un module qui est équipé de dispositifs de connexion mâle/femelle pour les composantes actionnables électriquement, et de dispositifs de raccordement du côté entrée et sortie pour les composantes actionnables fluidiquement.

10. Dispositif de commande et/ou de réglage de pression selon l'une des revendications 1 à 9
caractérisé en ce que le générateur de pression (7) est précédé d'une installation de production d'azote qui sépare l'azote de l'air.
